# EUROPÄISCHE PATENTANMELDUNG

(11) **EP 2 674 821 A2**
(43) Veröffentlichungstag der Anmeldung: **18.12.2013**
(21) Anmeldenummer: 13171525.2
(22) Anmeldetag: 11.06.2013
(51) Int. Cl.: G05B 9/03, G01F 1/36

(54) **Laborabzug**

(30) Priorität: 11.06.2012 DE 102012011345
(71) Anmelder: Köttermann GmbH & Co. KG, 31311 Uetze/Hänigsen (DE)
(72) Erfinder: Abels, Andreas, 31311 Uetze (DE); Waldau, Ralf, 29364 Langlingen (DE)
(74) Vertreter: Bremer, Ulrich

(57) **Zusammenfassung**

Die Erfindung betrifft einen Laborabzug (2), mit
einem Gehäuse (4), das einen Arbeitsraum (3) umgibt und eine vorderseitige Zugangsöffnung (18) für eine Bedienperson aufweist,
einem höhenverstellbaren Frontschieber (22) zum vollständigen oder teilweisen Verschließen der Zugangsöffnung (18),
eine Ablufteinrichtung (21) zum Abführen von Luft aus dem Arbeitsraum (3) als Abluftvolumenstrom,
wobei über die Zugangsöffnung (18) Zuluft in den Arbeitsraum (3) zuführbar ist.

Hierbei ist vorgesehen, dass
der Laborabzug (2) weiterhin aufweist
ein Messsystem (24) mit einer ersten Sensoreinrichtung (27) zur Ermittlung eines ersten Messsignals (S1) des Abluftvolumenstromes in der Ablufteinrichtung (21), einer zweiten Sensoreinrichtung (28) zur Ermittlung eines zweiten Messsignals (S2) einer Einströmgeschwindigkeit in den Arbeitsraum (3) und einer dritten Einrichtung, insbesondere einer dritten Sensoreinrichtung (28) zur Ermittlung einer Frontschieberstellung und Ausgabe eines dritten Messsignals, und
eine Steuereinrichtung (50) zum Vergleichen der ersten und zweiten Messsignale (S1, S2) und vorzugsweise dritten Messsignale (S3) und zur Durchführung einer Plausibilitätsprüfung, ob die ersten, zweiten und vorzugsweise dritten Messignale (S1, S2, S3) sich entsprechen.

## Beschreibung

Die Erfindung betrifft einen Laborabzug, der insbesondere auch für die Handhabung von Gefahrstoffen geeignet ist.

Laborabzüge sind so ausgelegt, dass gefährliche luftgetragene Schadstoffkonzentrationen oder - mengen nicht vom inneren Arbeitsraum in den umliegenden Raum gelangen können. Die Schadstoffe werden über eine Ablufteinrichtung mit aktiv ansteuerbarer Absaugeinrichtung (Gebläse) aus dem Arbeitsraum entfernt, um die Gefahr der Ausbildung einer explosiven oder gefährlichen Atmosphäre im Arbeitsraum zu verringern. Hierzu wird im Allgemeinen ein stetiger Luftstrom ausgebildet, so dass Luft aus dem umliegenden Raum durch die Zugangsöffnung in den Arbeitsraum gelangt und z. B. nach hinten oder oben abgesaugt wird. Die den Abzug nutzende Bedienperson ist gegen Spritzer und Splitter durch einen Frontschieber geschützt, der vorteilhafterweise verstellbar ist, um die Größe der Zugangsöffnung verändern zu können.

Ein Gegenstrom aus dem Arbeitsraum durch die Zugangsöffnung nach außen in den umliegenden Raum bei geöffnetem Frontschieber kann verhindert werden, wenn durch die Absaugeinrichtung ein hinreichender Luftstrom eingestellt wird.

Aus der DE 197 26 864 A1 ist eine Vorrichtung zum Messen des Abluftvolumenstroms in einem Abzug bekannt, bei dem abluftseitig zwei Messstellen im Abluftsammelkanal vorgesehen sind, von denen die eine Messstelle nahe den Öffnungen zum Innenraum des Abzugs und die andere Messstelle nahe am Anschluss des Abluftsammelkanals zu einem bauseitigen Abluftsystem liegt. Ein Drucksensor misst die Druckdifferenz zwischen den Messstellen und liefert ein Messsignal, das einer Einrichtung zugeführt ist, die daraus den Abluftvolumenstrom ermittelt. Dieses Verfahren wird insbesondere in Märkten eingesetzt, in denen Volumenströme vorgegeben werden, diese also überwacht und nicht unterschritten werden dürfen.

Grundsätzlich besteht bei Laborabzügen mit Volumenstrommessung jedoch die Gefahr, dass nicht ordnungsgemäß arbeitende Sensoren unzutreffender Weise einen ausreichenden Abluftvolumenstrom melden, dem Nutzer also Sicherheit suggerieren, die aber nicht gegeben ist.

Der Erfindung liegt die Aufgabe zugrunde, mit relativ geringem Aufwand eine hohe Sicherheit zu gewährleisten.

Diese Aufgabe wird durch einen Laborabzug nach Anspruch 1 gelöst. Die Unteransprüche beschreiben bevorzugte Weiterbildungen.

Erfindungsgemäß ist somit ein Messsystem mit einer ersten Sensoreinrichtung zur Ermittlung von ersten Messwerten des Abluftvolumenstromes in einer Ablufteinrichtung und einer zweiten Sensoreinrichtung zur Ermittlung von zweiten Messwerten einer Einströmgeschwindigkeit vorgesehen. Die beiden Messwerte werden von einer Ermittlungseinrichtung bewertet, um hierdurch eine Plausibilisierung zu ermöglichen.

Die Einströmgeschwindigkeit kann vorteilhafterweise nicht direkt in der Zugangsöffnung, sondern in einem parallel zu diesem ausgebildeten, in sämtlichen Stellungen des Frontschiebers offenen Eintrittsspalt erfolgen, der somit auch bei geschlossenem Frontschieber einen Lufteintritt gewährleistet. Die Messung des Abluftvolumenstroms kann vorzugsweise durch Messung einer Druckdifferenz an einem Hindernis in der Abzugseinrichtung erfolgen.

Gemäß einer bevorzugten Ausbildung kann die Plausibilitätsprüfung ferner in Abhängigkeit von weiteren Parametern des Laborabzugs erfolgen, wobei diese weiteren Parameter Messdaten und/oder Einstelldaten sein können, d.h. gemessen werden oder von z. B. einer zentralen Steuereinrichtung eingestellt werden. Die Parameter können insbesondere die Öffnungshöhe und/oder die Öffnungsgröße der Zugangsöffnung des verstellbaren Frontschiebers sein.

Dem liegt der erfindungsgemäße Gedanke zugrunde, dass Messwerte der Einströmgeschwindigkeit von der variablen Öffnungsgröße der Zugangsöffnung abhängen und die Berücksichtigung dieser Öffnungsgröße somit eine genauere Plausibilisierung bei dem Vergleich mit Messwerten des Abluftvolumenstroms ermöglicht. So wird bei weiter geöffnetem Frontschieber eine kleinere Einströmgeschwindigkeit gemessen, wohingegen der Abluft- Volumenstrom von der Öffnungshöhe nicht oder nicht relevant betroffen ist.

Für die Plausibilisierung können auch weitere Messwerte wie z. B. eine gemessene Temperatur herangezogen werden.

Es ergeben sich charakteristische Werte oder Kennwerte für die Druckdifferenz des Abluftvolumenstroms und die Einströmgeschwindigkeit; erfindungsgemäß können diese Kennwerte intern oder extern gespeichert werden. Diese ermittelten Kennwerte ermöglichen einen Vergleich der Messwerte aus den laufenden Messungen mit den abgespeicherten Kennwerten oder charakteristischen Werten; somit ist eine Plausibilisierung der Messwerte möglich, die z. B. vorgegebene Grenzwerte bzw. Schwankungen zulässt. Bei Überschreiten des Grenzwertes wird erkannt, dass zumindest eine der Sensoreinrichtungen nicht ordnungsgemäß funktioniert, und z. B. ein Warnsignal ausgegeben. Weiterhin kann die Leistung der Absaugeinrichtung erhöht werden, wenn dieses z. B. durch eine Regelung möglich ist.

Vorteilhafterweise werden somit nicht lediglich von zwei Messeinrichtungen Volumenströme ermittelt und diese Werte miteinander verglichen; vielmehr wird ein selbstlernendes, adaptives Messsystem geschaffen, das vorzugsweise weitere Messwerte wie insbesondere eine Öffnungsgröße der Zugangsöffnung berücksichtigt und eine Bewertung in Kennwert-Tabellen oder Kennlinien ermöglicht.

Indem zwei Sensorsysteme mit unterschiedlichen Messprinzipien und an unterschiedlichen Positionen, nämlich am Einlass und Auslass eingesetzt werden, kann das Auftreten systematischer Fehler gering gehalten werden.

Die erfindungsgemäß vorgesehene Plausibilitätsprüfung erfolgt vorzugsweise regelmäßig bzw. fortlaufend, sodass die Sensoreinrichtungen hinsichtlich ihrer Funktionsfähigkeit ständig geprüft werden, was die Sicherheit des Messsystems und damit des Laborabzugs selbst erhöht. Mögliche Fehler können mit relativ geringem Aufwand erkannt werden. Bei Erkennen eines möglichen Fehlers, der z. B. ein unzulässiger Rückfluss sein kann, kann somit umgehend ein Warnsignal ausgegeben werden. Weiterhin kann auch ein selbsttätiger Eingriff erfolgen; z. B. eine Maßnahme zum Stoppen des Rückflusses, beispielsweise durch Ansteuerung der Absaugeinrichtung und somit Erhöhung des Abluftvolumenstroms, falls eine Volumenstromregelung vorgesehen ist.

Grenzwerte oder Toleranzen der Abweichung können in Abhängigkeit verschiedener Größen, insbesondere auch charakteristischer Größen des Laborabzugs festgelegt werden. Wenn in dem Frontschieber Eingriffsöffnungen für die Arme des Bedienpersonals ausgebildet sind, kann dies als Toleranz berücksichtigt werden und in den Kennlinien abgelegt werden.

Die Erfindung wird nachfolgend anhand der beigefügten Zeichnungen an einer Ausführungsform näher erläutert. Es zeigen:
Fig. 1 eine perspektivische Ansicht eines Laborabzugs gemäß einer Ausführungsform; und
Fig. 2 ein Kennlinienfeld mit Messsignalen S1, S2, S3.

Ein Laborabzug 2 ist auf einem Gestell 1 angeordnet und weist ein z. B. kastenförmiges Gehäuse 4 auf, das einen Arbeitsraum 3 umschließt. Das Gehäuse 4 weist einen Boden 6, eine Rückwand 8, zwei Seitenwände 10, 12, eine Decke 14 und ein Frontteil 16 auf. Das Frontteil 16 ist mit einer Zugangsöffnung 18 (Eingriffsöffnung) versehen, über die der Arbeitsraum 3 zugänglich ist und deren Öffnungsgröße durch einen im Frontteil 16 verschiebbar angeordneten Frontschieber 22 veränderbar oder verstellbar ist. Weiterhin ist eine Ablufteinrichtung 21 vorgesehen, in der eine Absaugeinrichtung 45 bzw. Gebläse vorgesehen oder extern an die Absaugeinrichtung 45 angeschlossen ist, so dass die Absaugeinrichtung 45 in dem Laborabzug 2 oder auch in einem externen Abluftkanal vorgesehen sein kann.

Der Laborabzug 2 umfasst ein Messsystem 24 , das als erste Sensoreinrichtung einen Volumenstromsensor 27 zur Messung des Abluftvolumenstromes in der Ablufteinrichtung 21 und als zweite Sensoreinrichtung einen Strömungssensor 28 zur Messung einer Einströmgeschwindigkeit aufweist.

Der Volumenstromsensor 27 misst hier eine Druckdifferenz zwischen zwei Messpunkten 27a, 27b, zwischen denen ein die Strömung behinderndes Mittel 27c, z. B. eine Prallplatte, angeordnet ist, und gibt ein erstes Messsignal S1 aus.

Der Strömungssensor 28 misst eine Strömungsgeschwindigkeit; hierzu ist der Strömungssensor 28 funktionell im Bereich einer Einlassöffnung 29 zwischen dem umgebenden Laborraum und dem Arbeitsraum 3 angeordnet. Diese Einlassöffnung kann z. B. an der Decke 14 oder einer Seitenwand 10, 12 oder wie gezeigt dem Frontteil 16 ausgebildet sein.

Weiterhin ist im Allgemeinen ein Einlassspalt vorgesehen, der parallel zu der Einlassöffnung 18 Einlassluft auf der Umgebung einlässt, so dass auch bei vollständig geschlossenem Frontschieber 22 ein Zuluft-Strom gewährleistet ist. Der Strömungssensor 28 kann grundsätzlich in oder an diesem Einlassspalt vorgesehen sein; vorteilhafterweise ist die Einlassöffnung 29 jedoch getrennt von diesem Einlassspalt vorgesehen und separat für den Strömungssensor 28 ausgebildet.

Weiterhin weist das Messsystem 24 einen Frontschieber-Höhensensor 30 (Frontschieber-Positionssensor) zur Messung der Höhenposition des Frontschiebers 22 und Ausgabe eines Positions-Messsignals S3 auf, wobei der Frontschieber-Höhensensor 30 z. B. optisch, magnetisch oder elektrisch ausgelegt sein kann.

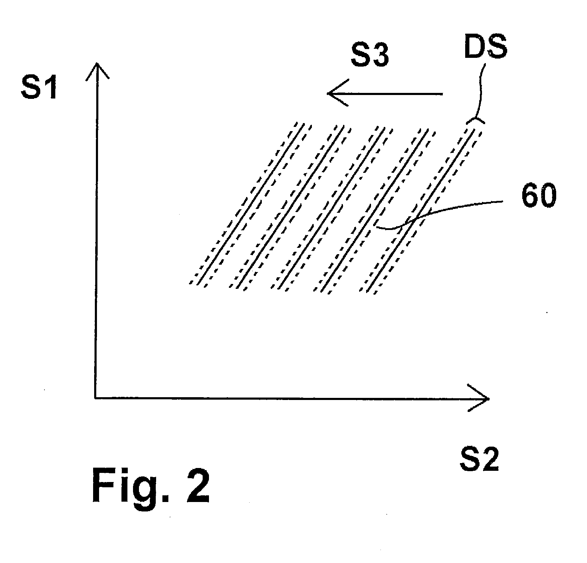

Die Messsignale S1, S2, S3 werden an eine zentrale Steuereinrichtung 50 gegeben, die eine Plausibilitätsprüfung durchführt und hierzu auf in einer externen oder internen Speichereinrichtung 52 gespeicherte, in Fig. 2 Kenndaten oder Kennlinien 60 zurückgreift, die in vorherigen Messungen gespeichert wurden. Somit können Messwerte von S1 entsprechenden Messwerten von S2 bei jeweiligen Werten von S3 zugeordnet werden. So können z. B. mit steigender Öffnungshöhe gemäß dem dritten Messsignal S3 die Kennlinien 60 derartig verschoben werden, dass bei einem jeweiligen Wert des Abluftvolumentstroms gemäß dem ersten Messsignal S1 eine kleinere Einströmgeschwindigkeit gemäß dem zweiten Messsignal S2 ermittelt wird.

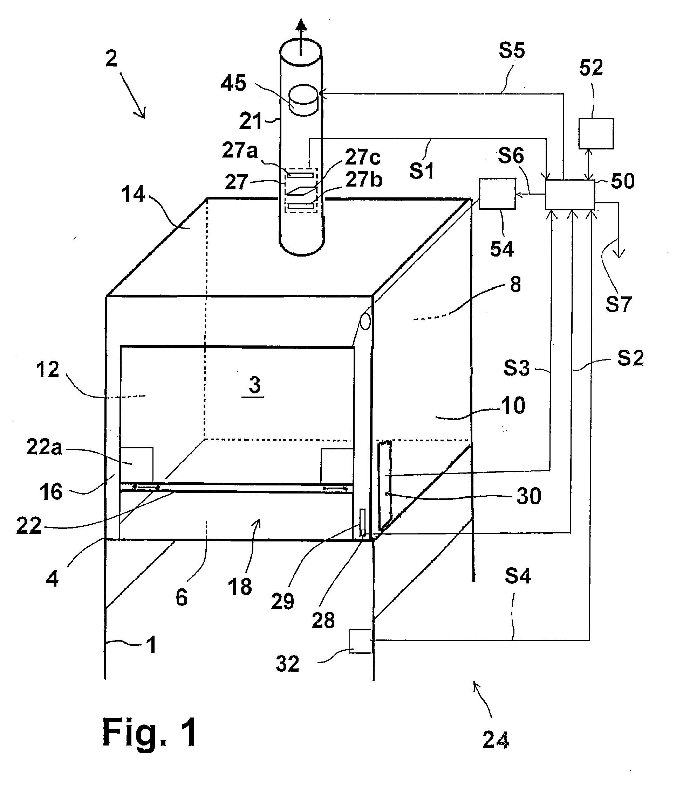

Gemäß Fig. 1 können in dem Frontschiebe 22 Eingriffsöffnungen 22a augebildet sein, die durch Seitenschieber 22b variabel verstellbar sind. Erfindungsgemäß wird erkannt, dass auch durch die - nicht direkt messbare -

Öffnungsstellung der Seitenschieber 22b das zweite Messsignal S2 der Einströmgeschwindigkeit beeinflusst wird, da hierdurch Fremdluft parallel zum Einlassspalt 29 eintritt; diese Auswirkung ist weiterhin von der Öffnungshöhe, d.h. dem dritten Messsignal S3 abhängig und wirkt sich bei weiter geschlossenem Frontschieber 22 stärker aus. Dies kann als Toleranz DS in den Kennlinien 60 berücksichtigt werden. DS kann somit variieren.

Die Steuereinrichtung 50 kann weiterhin von einem Anwesenheitssensor 32, der den Bereich vor dem Laborabzug 2 überwacht, ein viertes Messsignal S4 aufnehmen, z. B. um bei Abwesenheit von Bedienpersonal einen Schließvorgang einzuleiten.

Die Steuereinrichtung 50 gibt z. B. weiterhin erste Steuersignale S5 an die Absaugeinrichtung 45 zur Einstellung des Abluftstromes und zweite Steuersignale S6 an einen Motor 54 zur Verstellung des Frontschiebers 22 aus. Allerdings kann die Funktionalität der Steuereinrichtung 50 von diesen Ansteuerungen auch getrennt vorgesehen sein.

Grundsätzlich können auch die zweiten Steuersignale S6 als Positionssignale für die Öffnungshöhe des Frontschiebers 22 herangezogen werden, so dass die Sensoreinrichtung 30 entfällt; demnach werden in Fig. 2 die Kennlinien in Abhängigkeit von S6 statt S3 abgelegt.

Weiterhin kann die Steuereinrichtung 50 ein Warnsignal S7 ausgeben, wenn eine fehlende Plausibilisierung der Messsignale S1, S2, S3 erkannt wird.

Gemäß einer bevorzugten Ausbildung kann die Steuereinrichtung 50 die Kennlinien 60 durch einen Kalibrierungsvorgang ermitteln, bei dem der Frontschieber 22 durch die Steuersignale S6 verschlossen wird und in den jeweiligen Stellungen die Messsignale S1, S2 und S3 gemessen werden; somit kann das in Fig. 2 gezeigte Kennlinienfeld systematisch abgefahren werden. Dieser Kalibrierungsvorgang kann z. B. durch einen Benutzer durch Eingabe eines Startsignals an die Steuereinrichtung 50 gestartet werden.

### Bezugszeichenliste

- 1: Gestell
- 2: Laborabzug
- 3: Arbeitsraum
- 4: Gehäuse
- 6: Boden
- 8: Rückwand
- 10: Seitenwand
- 12: Seitenwand
- 14: Decke
- 16: Frontteil
- 18: Zugangsöffnung
- 21: Ablufteinrichtung
- 22: Frontschieber
- 24: Messsystem
- 27: Volumenstromsensor
- 27a,b: Messpunkte
- 27c: Prallplatte
- 28: Strömungssensor
- 29: Einlassspalt in 16
- 30: Frontschieber-Höhensensor
- 32: Anwesenheitssensor
- 45: Absaugeinrichtung
- 50: Steuereinrichtung
- 52: Speicher
- 54: Motor

- S1: erstes Messsignal des Volumenstromsensors 27
- S2: zweites Messsignal des Strömungssensors 28
- S3: drittes Messsignal des Frontschieber-Höhensensors 30
- S4: viertes Messsignal ds Anwesenheitssensors 32
- S5: erstes Steuersignal an die Absaugeinrichtung
- S6: zweites Steuersignal an den Motor 54
- S7: Warnsignal

## Patentansprüche

1. Laborabzug (2), mit
einem Gehäuse (4), das einen Arbeitsraum (3) umgibt und eine vorderseitige Zugangsöffnung (18) für eine Bedienperson aufweist,
einem höhenverstellbaren Frontschieber (22) zum vollständigen oder teilweisen Verschließen der Zugangsöffnung (18),
eine Ablufteinrichtung (21) zum Abführen von Luft aus dem Arbeitsraum (3) als Abluftvolumenstrom,
wobei über die Zugangsöffnung (18) Zuluft in den Arbeitsraum (3) zuführbar ist,
**dadurch gekennzeichnet, dass**
der Laborabzug (2) weiterhin aufweist:
ein Messsystem (24) mit einer ersten Sensoreinrichtung (27) zur Ermittlung eines ersten Messsignals (S1) des Abluftvolumenstromes in der Ablufteinrichtung (21), einer zweiten Sensoreinrichtung (28) zur Ermittlung eines zweiten Messsignals (S2) einer Einströmgeschwindigkeit in den Arbeitsraum (3) und einer dritten Einrichtung (30) zur Ermittlung einer Stellung des Frontschiebers (22) und Ausgabe von dritten Signalen (S3), und
eine Steuereinrichtung (50) zum Vergleichen der ersten und zweiten Messsignale (S1, S2) und dritten Signale (S3) und zur Durchführung einer Plausibilitätsprüfung, ob die ersten Messsignale (S1), zweiten Messsignale (S2) und dritten Signale (S3) sich entsprechen.

2. Laborabzug nach Anspruch 1, **dadurch gekennzeichnet, dass** die dritte Einrichtung (30) eine dritte Sensoreinrichtung (30) zur Ermittlung einer Stellung des Frontschiebers (22) und zur Ausgabe von dritten Messsignalen (S3) an die Steuereinrichtung (50) ist.

3. Laborabzug nach Anspruch 1, **dadurch gekennzeichnet, dass** die Einrichtung zur Ermittlung einer Stellung des Frontschiebers (22) Steuersignale (S6) oder Stellsignale zur Einstellung einer Antriebseinrichtung (54) des Frontschiebers (22) aufnimmt.

4. Laborabzug nach einem der vorherigen Ansprüche, **dadurch gekennzeichnet, dass** die zweite Sensoreinrichtung (28) die Einströmgeschwindigkeit durch Messung einer Abkühlung eines elektrischen Bauelementes, z. B. einer Diode, misst.

5. Laborabzug nach einem der vorherigen Ansprüche, **dadurch gekennzeichnet, dass** das Gehäuse (4) zusätzlich zur Zugangsöffnung (18) mindestens eine Einlassöffnung (29) für einen permanenten Lufteinlass aufweist, wobei die zweite Sensoreinrichtung (28) in der Einlassöffnung (29) zur Messung der Einströmgeschwindigkeit durch den Einlassspalt (29) vorgesehen ist.

6. Laborabzug nach einem der vorherigen Ansprüche, **dadurch gekennzeichnet, dass** die erste Sensoreinrichtung (27) den Abluftvolumenstrom durch Ermittlung einer Druckdifferenz zwischen zwei in Strömungsrichtung hintereinander liegenden Messpunkten (27a, 27b) in der Ablufteinrichtung (21) misst.

7. Laborabzug nach einem der vorherigen Ansprüche, **dadurch gekennzeichnet, dass** der Frontschieber (22) mindestens eine Seitenscheibe (22a) aufweist, die in mindestens einer Stellung des Frontschiebers (22) in unterschiedliche Öffnungsstellungen einstellbar ist, wobei die Steuereinrichtung (50) bei der Plausibilitätsprüfung den Öffnungsbereich der mindestens einen Seitenscheibe (22a) als Grenzwert oder Toleranzwert berücksichtigt.

8. Laborabzug nach einem der vorherigen Ansprüche, **dadurch gekennzeichnet, dass** die Steuereinrichtung (50) eine Absaugeinrichtung (21) zum Absaugen von Luft ansteuert und bei Erkennen einer fehlenden Plausibilität die Absaugleistung erhöht.

9. Laborabzug nach einem der vorherigen Ansprüche, **dadurch gekennzeichnet, dass** die Ermittlungseinrichtung (50) in Abhängigkeit der Plausibilitätsprüfung Ausgabesignal (S7) ausgibt, insbesondere Warnsignale (S7) zur Anzeige einer fehlerhaften und/oder unsicheren Funktionsfähigkeit des Messsystems (24).

10. Laborabzug nach einem der vorherigen Ansprüche, **dadurch gekennzeichnet, dass** die Steuereinrichtung (59)
- die ersten und zweiten Messsignale (S1, S2) und die dritten Signale (S3) in einem Speicher (52) als Kennwerte oder Kennlinien (60) speichert, die zulässige Werte-Beziehungen festlegen, und
- für die Plausibilitätsprüfung neu aufgenommene Messsignale (S1, S2, S3) mit den gespeicherten Kennlinien (60) vergleicht.

11. Laborabzug nach einem der vorherigen Ansprüche, **dadurch gekennzeichnet, dass** die Steuereinrichtung (50) einen Motor (54) für die Verstellung des Frontschiebers (22) ansteuert,
wobei die Steuereinrichtung (50) zur Durchführung eines Kalibrierungsvorgangs ausgelegt ist, bei der sie den Frontschieber (22) über den Motor (54) in verschiedene Stellungen verstellt und in den Stellungen jeweils erste Messsignale (S1), zweite Messsignale (S2) und dritte Signale (S3) aufnimmt und als Kennlinien (60) abspeichert.
